# EUROPEAN PATENT APPLICATION

(11) **EP 4 654 542 A1**
(43) Date of publication of application: **26.11.2025**
(21) Application number: 24752636.1
(22) Date of filing: 09.01.2024
(51) Int. Cl.: H04L 41/0813, H04W 24/02, H04W 60/00, H04L 41/0816

(54) **COMMUNICATION METHOD AND COMMUNICATION APPARATUS**

(30) Priority: 10.02.2023 CN 202310125169
(71) Applicant: Huawei Technologies Co., Ltd., Shenzhen, Guangdong 518129 (CN)
(72) Inventor: HU, Xiange, Shenzhen, Guangdong 518129 (CN); CAI, Wenjuan, Shenzhen, Guangdong 518129 (CN); XU, Ling, Shenzhen, Guangdong 518129 (CN); FAN, Jing, Shenzhen, Guangdong 518129 (CN); WEN, Xiao, Shenzhen, Guangdong 518129 (CN); JIANG, Debin, Shenzhen, Guangdong 518129 (CN)
(74) Representative: Goddar, Heinz J.
(86) International application number: PCT/CN2024/071330
(87) International publication number: WO 2024/164778

(57) **Abstract**

Embodiments of this application provide a communication method and a communication apparatus. The communication method includes: A network device obtains user subscription information, where the user subscription information indicates that MPS information of a terminal device changes; and the network device sends a first message to the terminal device, where the first message is for triggering the terminal device to re-register, so that the terminal device updates an MPS indicator in a re-registration process, and the network device supports triggering, by using a CUC message, the terminal device to update the MPS indicator. According to the communication method and the communication apparatus provided in embodiments of this application, when the MPS information of the terminal device changes, even if the terminal device does not support updating the MPS indicator by using the CUC message, the terminal device can be triggered to update the MPS indicator in a re-registration manner, to avoid performing an incorrect access attempt during unified access control due to a mismatch between a link establishment cause mapped when the terminal device requests to initiate a service and actual subscription information of a user, enhancing user experience.

## Description

This application claims priority to Chinese Patent Application No. 202310125169.9, filed with the China National Intellectual Property Administration on February 10, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

A multimedia priority service (multimedia priority service, MPS) enables a user who has subscribed to the service to access, with a higher priority, a system resource in some scenarios such as a congestion scenario, to ensure that a high-priority session is completed. This type of user may be a government authorized person, an emergency management person, or the like.

Some protocols of the 3rd generation partnership project (3rd Generation Partnership Project, 3GPP) support a network device to indicate a terminal device to update a stored MPS indicator (MPS indicator) by using a priority indicator information element (priority indicator IE) item that is newly added in a configuration update command (configuration update command, CUC) message. The MPS indicator indicates whether a user is a multimedia priority service type user. A value of the MPS indicator may be for mapping a link establishment cause when the terminal subsequently requests to initiate the service. If the MPS indicator indicates that the user is the multimedia priority service type user, the user may preferentially access when the service is requested to be initiated.

However, if the terminal device complies with a protocol other than the foregoing protocols, the priority indicator information element item included in the CUC message cannot be parsed out, causing the user to perform an incorrect access attempt during unified access control due to a mismatch between a link establishment cause mapped when the service is requested to be initiated next time and actual subscription information of the user.

### SUMMARY

Embodiments of this application provide a communication method and a communication apparatus, so that when MPS information, namely, an access ID (access identity), of a terminal device changes, even if the terminal device does not support updating an MPS indicator by using a CUC message, the terminal device can also be triggered to re-register to update the MPS indicator, to reduce a possibility that a connection of the terminal device is rejected or a due high-priority service cannot be obtained, enhancing user experience.

According to a first aspect, a communication method is provided, and is applied to a network device, where the network device supports triggering, by using a CUC message, a terminal device to update a multimedia priority service MPS indicator. The method includes: obtaining user subscription information, where the user subscription information indicates that MPS information of the terminal device changes, and the MPS information indicates an MPS access ID of the terminal device; and sending a first message to the terminal device, where the first message is for triggering the terminal device to re-register, so that the terminal device updates the MPS indicator in a re-registration process, where the MPS indicator indicates the MPS information of the terminal device. If the user subscription information indicates that MCS (Mission Critical Service) information of the terminal device changes, and the MCS information indicates an MCS access ID of the terminal device, the first message may alternatively be sent to trigger the terminal device to re-register, to help the terminal device update an MCS indicator, where the MCS indicator indicates the MCS information of the terminal device. The following MPS scenario is also applicable to an MCS scenario. This is not limited.

In this embodiment, the network device may be an AMF (access and mobility management function) network element, and the AMF network element may obtain the user subscription information (user subscription information, which may also be referred to as user subscription context user subscription context information) from a UDM (unified data management) network element, and determine that the MPS information of the terminal device changes. The MPS access ID (access identity) of the terminal device may be represented by "0" or "1", where "0" indicates that the terminal device is not an MPS access type user, and "1 " indicates that the terminal device is an MPS access type user. The network device supports triggering, by using the CUC message, the terminal device to update the MPS indicator. In other words, the network device can trigger, by sending, to the terminal device, a CUC message that carries changed MPS information, the terminal device to update the MPS indicator. In some 3GPP protocols, updating the MPS indicator by using the CUC message is newly added. After determining that the MPS information of the terminal device changes, the network device may directly indicate, by using the first message, the terminal device to re-register. In this way, the terminal device can update the MPS indicator in the re-registration process, and store the changed MPS information for subsequently requesting to initiate a service process. Because the network device directly triggers, when the MPS information of the terminal device changes, the terminal device to re-register, even if the terminal device does not support updating the MPS indicator by using the CUC message, the terminal device can also update the MPS indicator and obtain a corresponding service, to reduce a possibility that a connection of the terminal device is rejected because the terminal device cannot perform parsing due to direct sending of the CUC message to update the MPS information, enhancing user experience.

With reference to the first aspect, in some implementations of the first aspect, before sending the first message to the terminal device, the method further includes: obtaining capability information indicating that the terminal device does not support updating the MPS indicator by using the configuration update command CUC message.

In this embodiment, the network device may indicate, by using the first message, the terminal device to re-register, only after learning that the terminal device does not support updating the MPS indicator by using the CUC message.

Optionally, if the network device learns that the terminal device supports updating the MPS indicator by using the CUC message, the network device may send a CUC message that carries updated MPS information to a network, so that the terminal device can update the MPS indicator. In this way, for terminal devices having different capabilities, the terminal devices are triggered in different manners to update the MPS indicator, so that signaling exchange between the terminal device and the network device can be reduced.

With reference to the first aspect, in some implementations of the first aspect, obtaining the capability information indicating that the terminal device does not support updating the MPS indicator by using the CUC message includes: sending a second CUC message to the terminal device, where the second CUC message includes the changed MPS information; receiving a configuration update response message from the terminal device, where the configuration update response message does not include a third indication item, and the third indication item indicates that the terminal device successfully updates the MPS indicator; and determining, based on the configuration update response message not including the third indication item, that the terminal device does not support updating the MPS indicator by using the CUC message. The configuration update response message may be a configuration update complete (Configuration Update Complete) message defined in a current standard.

In other words, only the terminal device that supports updating the MPS indicator by using the CUC message sends, to the network device, the configuration update response message that carries the third indication item, so that the network device may determine a capability of the terminal device based on whether the configuration response message includes the third indication item. In this way, signaling of a terminal device that supports an earlier protocol version (which does not support updating the MPS indicator by using the CUC message) can be avoided from being modified, so that the technical solution in this embodiment of this application is more conveniently implemented.

Optionally, if the configuration update response message includes the third indication item, the network device may determine that the terminal device supports updating the MPS indicator by using the CUC message.

With reference to the first aspect, in some implementations of the first aspect, obtaining the capability information indicating that the terminal device does not support updating the MPS indicator by using the CUC message includes: sending a second CUC message to the terminal device, where the second CUC message includes the changed MPS information; receiving a configuration update response message from the terminal device, where the configuration update response message includes a third indication item, and the third indication item indicates that the terminal device fails to decode or update the second CUC message; and determining, based on the third indication item indicating that the terminal device fails to decode the second CUC message, that the terminal device does not support updating the MPS indicator by using the CUC message.

In this embodiment, the network device may send, to the terminal device, the second CUC message that carries the changed MPS information, and the terminal device indicates, in the replied configuration response information, whether the second CUC message is successfully decoded or updated. If the terminal device does not decode or update the second CUC message, the network device may infer that the terminal device does not support updating the MPS indicator by using the CUC message, and then may send the first message to the terminal device to indicate the terminal device to re-register, so that the terminal device may update the MPS indicator in the re-registration process.

Optionally, if the terminal device indicates, in the replied configuration response information, that the second CUC message is successfully decoded to complete update, the terminal device may update the MPS indicator based on the second CUC message, the network device may learn, by using the configuration response information, that the terminal device has updated the MPS indicator, and an update procedure of the MPS indicator ends.

With reference to the first aspect, in some implementations of the first aspect, obtaining the capability information indicating that the terminal device does not support updating the MPS indicator by using the CUC message includes: receiving a first registration request message from the terminal device; and determining, based on the first registration request message, that the terminal device does not support updating the MPS indicator by using the CUC message.

In this embodiment, the network device may determine, based on the first registration request message sent by the terminal device during registration, that the terminal device does not support updating the MPS indicator by using the CUC message. In other words, during registration of the terminal device, the network device can determine that the terminal device does not support updating the MPS indicator by using the CUC message, and then directly triggers, by sending the first message when the MPS information of the terminal device subsequently changes, the terminal device to update the MPS indicator in the re-registration process.

Optionally, if the terminal device determines, by using the first registration request message, that the terminal device supports updating the MPS by using the CUC message, when the MPS information of the terminal device changes, the CUC message that carries the changed MPS information may be sent, so that the terminal device updates the MPS indicator based on the CUC message. In this way, the signaling exchange between the terminal device and the network device and impact on service quality of the terminal device can be reduced.

With reference to the first aspect, in some implementations of the first aspect, determining, based on the first registration request message, that the terminal device does not support updating the MPS indicator by using the CUC message includes: determining, based on the first registration request message not including a first indication item, that the terminal device does not support updating the MPS indicator by using the CUC message, where the first indication item indicates that the terminal device supports updating the MPS indicator by using the CUC message.

Optionally, the network device may determine, based on the first registration request message including the first indication item, that the terminal device supports updating the MPS indicator by using the CUC message.

In other words, when the terminal device that supports updating the MPS indicator by using the CUC message sends the first registration request message, the first indication item is carried, to indicate that the terminal device supports updating the MPS indicator by using the CUC message, so that the network device determines the capability of the terminal device by determining whether the first registration request message includes the first indication item.

In this way, only signaling of a terminal device that supports a later protocol version needs to be modified, so that the technical solution in this embodiment of this application is more conveniently implemented.

With reference to the first aspect, in some implementations of the first aspect, the first registration request message includes a first indication item, where the first indication item indicates that the terminal device does not support updating the MPS indicator by using the CUC message.

In other words, the terminal device reports, by using the first indication item, that the terminal device does not support updating the MPS indicator by using the CUC message.

Optionally, the terminal device may alternatively report, by using the first indication item, that the terminal device supports updating the MPS indicator by using the CUC message.

The first indication item may explicitly indicate whether the terminal device supports updating the MPS indicator by using the CUC message, so that the network device can directly and accurately obtain the capability information of the terminal device.

With reference to the first aspect, in some implementations of the first aspect, determining, based on the first registration request message, that the terminal device does not support updating the MPS indicator by using the CUC message includes: determining, based on the first registration request message not including a second indication item, that the terminal device does not support updating the MPS indicator by using the CUC message, where the second indication item includes at least one of the following: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-l2relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, a paging indication for voice services PIV, reject paging request RPR, paging restriction PR, network slice simultaneous registration group NSSRG, minimization of service interruption MINT, event notification EventNotification, extended closed access group information list support Ex-CAG, and network slice access group NSAG.

In this embodiment, the network device may infer, based on the registration request message sent by the terminal device during registration not including the second indication item, that the terminal device does not support updating the MPS indicator by using the CUC message. Because the second indication item is a newly added item in a specific protocol, the network device may infer the capability of the terminal device based on whether the second indication item exists, and then trigger the terminal device to update the MPS indicator in a re-registration manner or by using the CUC message.

Initially, a part of terminal devices do not support a related protocol (the protocol that does not support updating the MPS indicator by using the CUC message). After upgrade, a part of capability information in the related protocol may be obtained, so that a part of the second indication item exists in the registration request message of the terminal device, causing a determining error to occur when the network device determines whether the terminal device supports updating the MPS indicator by using the CUC message.

Optionally, the network device may determine, based on the second indication item existing in the first registration request message, that the terminal device supports updating the MPS indicator by using the CUC message.

With reference to the first aspect, in some implementations of the first aspect, the first message is any one of the following: a service reject message, a first CUC message, and a deregistration message, where the first CUC message includes a registration request indicator bit, and the registration request indicator bit indicates the terminal device to re-register.

With reference to the first aspect, in some implementations of the first aspect, the method further includes: receiving a second registration request message from the terminal device; and sending a second registration accept message to the terminal device, where the second registration accept message includes the changed MPS information, so that the terminal device updates the MPS indicator based on the second registration accept information.

According to a second aspect, a communication method is provided, and is applied to a terminal device. The method includes: receiving a first message from a network device, where the first message is for triggering the terminal device to re-register, the first message is sent by the network device based on multimedia priority service MPS information of the terminal device changing, and the MPS information indicates an MPS access ID of the terminal device; and updating an MPS indicator in a re-registration process, where the MPS indicator indicates the MPS information of the terminal device.

With reference to the second aspect, in some implementations of the second aspect, the first message is sent by the network device based on the terminal device not supporting updating the MPS indicator by using a CUC message.

With reference to the second aspect, in some implementations of the second aspect, before receiving the first message from the network device, the method further includes: receiving a second configuration update command CUC message from the network device, where the second CUC message includes changed MPS information; and sending a configuration update response message to the network device, where the configuration update response message does not include a third indication item, so that the network device determines, based on the configuration update response message not including the third indication item, that the terminal device does not support updating the MPS indicator by using the CUC message, where the third indication item indicates that the terminal device successfully updates the MPS indicator.

With reference to the second aspect, in some implementations of the second aspect, before receiving the first message from the network device, the method further includes: receiving a second configuration update command CUC message from the network device, where the second CUC message includes changed MPS information; and sending a configuration update response message to the network device, where the configuration update response message includes a third indication item, and the third indication item indicates that the terminal device fails to decode or update the second CUC message, so that the network device determines, based on the configuration update response message, that the terminal device does not support updating the MPS indicator by using the CUC message.

With reference to the second aspect, in some implementations of the second aspect, before receiving the first message from the network device, the method further includes: sending a first registration request message to the network device, so that the network device determines, based on the first registration request message, that the terminal device does not support updating the MPS indicator by using the CUC message.

With reference to the second aspect, in some implementations of the second aspect, the first registration request message does not include a first indication item, and that the terminal device does not support updating the MPS indicator by using the CUC message is determined by the network device based on the first registration request message not including the first indication item, where the first indication item indicates that the terminal device supports updating the MPS indicator by using the CUC message.

With reference to the second aspect, in some implementations of the second aspect, the first registration request message includes a first indication item, where the first indication item indicates that the terminal device does not support updating the MPS indicator by using the CUC message.

With reference to the second aspect, in some implementations of the second aspect, that the terminal device does not support updating the MPS indicator by using the CUC message is determined based on the first registration request message not including a second indication item, where the second indication item includes at least one of the following: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, paging indication for voice services PIV, reject paging request RPR, paging restriction PR, network slice simultaneous registration group NSSRG, minimization of service interruption MINT, event notification EventNotification, extended closed access group information list support Ex-CAG, and network slice access group NSAG.

With reference to the second aspect, in some implementations of the second aspect, the first message is any one of the following: a service reject message, a first CUC message, and a deregistration message, where the first CUC message includes a registration request indicator bit, and the registration request indicator bit indicates the terminal device to re-register.

With reference to the second aspect, in some implementations of the second aspect, updating the MPS indicator in the re-registration process includes: sending a second registration request message to the network device; receiving a second registration accept message from the network device, where the second registration accept message includes the changed MPS information; and updating the MPS indicator based on the second registration accept message.

According to a third aspect, a communication method is provided, and is applied to a network device. The method includes: obtaining capability information indicating whether a terminal device supports updating a multimedia priority service MPS indicator by using a configuration update command CUC message, where the MPS indicator indicates MPS information of the terminal device; obtaining user subscription information, where the user subscription information indicates that the MPS information of the terminal device changes, and the MPS information indicates an MPS access ID of the terminal device; and sending a first message to the terminal device if the terminal device does not support updating the MPS indicator by using the CUC message, where the first message is for triggering the terminal device to re-register, so that the terminal device updates the MPS indicator in a re-registration process; or sending a second CUC message to the terminal device if the terminal device supports updating the MPS indicator by using the CUC message, where the second CUC message includes changed MPS information. A sequence of obtaining the capability information indicating whether the terminal device supports updating the multimedia priority service MPS indicator by using the configuration update command CUC message and obtaining the user subscription information is not limited.

In this embodiment, the network device can learn of the capability information indicating whether the terminal device supports updating the MPS indicator by using the CUC message, and then trigger, based on different capability information of the terminal device after the MPS information of the terminal device changes, the terminal device to update the MPS indicator. Specifically, for the terminal device that supports updating the MPS indicator by using the CUC message, the terminal device is triggered to update the MPS indicator by sending, to the terminal device, a CUC message that carries updated MPS information; or for the terminal device that does not support updating the MPS indicator by using the CUC message, the terminal device is indicated to re-register, so that the terminal device can update the MPS indicator in the re-registration process, to reduce a possibility that a service of a user is affected because update of the MPS indicator fails due to a capability of the terminal device, enhancing user experience.

With reference to the third aspect, in some implementations of the third aspect, obtaining the capability information indicating whether the terminal device supports updating the MPS indicator by using the CUC message includes: receiving a first registration request message from the terminal device; and determining, based on the first registration request information, the capability information indicating whether the terminal device supports updating the MPS indicator by using the CUC message.

With reference to the third aspect, in some implementations of the third aspect, determining the capability information indicating whether the terminal device supports updating the MPS indicator by using the CUC message includes: if the first registration request message includes a first indication item, determining that the terminal device supports updating the MPS indicator by using the CUC message; or if the first registration request message does not include the first indication item, determining that the terminal device does not support updating the MPS indicator by using the CUC message, where the first indication item indicates that the terminal device supports updating the MPS indicator by using the CUC message.

In this embodiment, when the terminal device that supports updating the MPS indicator by using the CUC message sends the first registration request message, the first indication item may be carried, so that the network device may determine the capability of the terminal device based on whether the first registration request message carries the first indication item. Because signaling of a terminal device that supports an earlier protocol version does not need to be modified, the technical solution in this embodiment of this application is more easily implemented.

With reference to the third aspect, in some implementations of the third aspect, the first registration request message includes a first indication item, where the first indication item indicates whether the terminal device supports updating the MPS indicator by using the CUC message.

In this embodiment, the first indication item may be set by the terminal device based on a capability of the terminal device about whether the terminal device supports updating the MPS indicator by using the CUC message, and may explicitly indicate the capability of the terminal device. After receiving the registration request message, the network device may intuitively determine, based on the first indication item, whether the terminal device supports updating the MPS indicator based on the CUC message, and then trigger or indicate the terminal device to update the MPS indicator by using different procedures.

With reference to the third aspect, in some implementations of the third aspect, determining the capability information indicating whether the terminal device supports updating the MPS indicator by using the CUC message includes: if the first registration request message includes a second indication item, determining that the terminal device supports updating the MPS indicator by using the CUC message; or if the first registration request message does not include the second indication item, determining that the terminal device does not support updating the MPS indicator by using the CUC message, where the second indication item includes at least one of the following: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, paging indication for voice services PIV, reject paging request RPR, paging restriction PR, network slice simultaneous registration group NSSRG, minimization of service interruption MINT, event notification EventNotification, extended closed access group information list support Ex-CAG, and network slice access group NSAG.

In this embodiment, if the first registration request message sent by the terminal device to the network device during registration includes the second indication item, and the second indication item is a newly added indication item in a protocol that supports updating the MPS indicator by using the CUC message, the network device may infer, based on the first registration request message including the second indication item, a protocol type supported by the terminal device, and then infer that the terminal device supports updating the MPS indicator by using the CUC message. If the first registration request message does not include the second indication item, the network device may infer that the terminal device does not support updating the MPS indicator by using the CUC message. In this way, the network device may determine the capability of the terminal device based on existing information in the registration request message, and trigger, in different manners based on the information, the terminal device to update the MPS indicator.

With reference to the third aspect, in some implementations of the third aspect, the first message is any one of the following: a service reject message, a first CUC message, and a deregistration message, where the first CUC message includes a registration request indicator bit (REG bit), and the registration request indicator bit indicates the terminal device to re-register.

In this embodiment, the network device may trigger, in different manners, the terminal device to re-register, to help the terminal device update the MPS indicator in the re-registration process.

With reference to the third aspect, in some implementations of the third aspect, if the terminal device does not support updating the MPS indicator by using the CUC message, the method further includes: receiving a second registration request message from the terminal device; and sending a second registration accept message to the terminal device, where the registration accept message includes the changed MPS information, so that the terminal device updates the MPS indicator based on the second registration accept message.

In this embodiment, the terminal device obtains the changed MPS information by using the registration accept message received in the re-registration process, and then updates the MPS indicator based on the changed MPS information.

According to a fourth aspect, a communication method is provided, and is applied to a terminal device. The method includes: sending a first registration request message to a network device, where the first registration request message includes a first indication item, the first indication item indicates that the terminal device does not support updating a multimedia priority service MPS indicator by using a configuration update command CUC message, and the MPS indicator indicates MPS information of the terminal device; receiving a first message from the network device, where the first message is sent when the network device determines that the MPS information of the terminal device changes, the MPS information indicates an MPS access ID of the terminal device, and the first message is for triggering the terminal device to re-register; and updating the MPS indicator in a re-registration process.

In this embodiment, when the terminal device sends the first registration request message to the network device in the registration process, the first indication item may be carried in the first registration request message, to indicate that the terminal device does not support updating the MPS indicator by using the CUC message. In this way, after subscription information of the terminal device changes, the network device may send, to the terminal device, the first message that indicates the terminal device to re-register, so that the terminal device updates the MPS indicator in the re-registration process.

Optionally, the first indication item may alternatively indicate that the terminal device supports updating the MPS indicator by using the CUC message. In this way, after the MPS information of the terminal device changes, the network device may send a second CUC message to the terminal device, where the second CUC message includes changed MPS information of the terminal device, so that the terminal device may update the MPS indicator based on the second CUC message. The first indication item may indicate a capability of the terminal device based on bits such as "0" and "1 ", where "1" indicates that the terminal device supports updating the MPS indicator by using the CUC message, and "0" indicates that the terminal device does not support updating the MPS indicator by using the CUC message.

Alternatively, the terminal device that supports updating the MPS indicator by using the CUC message sends the first registration request message that carries the first indication item, to avoid modifying signaling of a terminal device that supports an earlier protocol version. The network device may determine, based on whether the first indication item is carried, whether the terminal device supports updating the MPS indicator by using the CUC message, so that the technical solution in this embodiment of this application is more conveniently implemented.

With reference to the fourth aspect, in some implementations of the fourth aspect, the first message includes any one of the following: a service reject message, a first CUC message, and a deregistration message, where the first CUC message includes a registration request indicator bit, and the registration request indicator bit indicates the terminal device to re-register.

With reference to the fourth aspect, in some implementations of the fourth aspect, updating the MPS indicator in the re-registration process includes: sending a second registration request message to the network device; receiving a second registration accept message from the network device, where the second registration accept message includes the changed MPS information; and updating the MPS indicator based on the second registration accept message.

According to a fifth aspect, a communication method is provided, and is applied to a network device. The method includes: obtaining user subscription information, where the user subscription information indicates that multimedia priority service MPS information of a terminal device changes, and the MPS information indicates an MPS access ID of the terminal device; sending a second configuration update command CUC message to the terminal device, where the second CUC message includes changed MPS information; receiving a configuration update response message from the terminal device; and sending a second message to the terminal device if the configuration update response message does not include a third indication item, where the second message is for triggering the terminal device to re-register, so that the terminal device updates an MPS indicator in a re-registration process, where the third indication item indicates that the terminal device successfully updates the MPS indicator.

In this embodiment, only a terminal device that supports updating the MPS indicator by using the CUC message sends the configuration update response message that carries the third indication item, so that the network device determines a capability of the terminal device based on whether the configuration update response message includes the third indication item. In this way, signaling of a terminal device that supports an earlier protocol version does not need to be modified, so that the technical solution in this embodiment of this application is more conveniently implemented.

Optionally, the communication method includes: obtaining user subscription information, where the user subscription information indicates that multimedia priority service MPS information of a terminal device changes, and the MPS information indicates an MPS access ID of the terminal device; sending a second configuration update command CUC message to the terminal device, where the second CUC message includes changed MPS information; receiving a configuration update response message from the terminal device, where the configuration update response message includes a third indication item, and the third indication item indicates whether the terminal device successfully decodes or updates the second CUC message; and sending a second message to the terminal device if the terminal device fails to decode or update the second CUC message, where the second message is for triggering the terminal device to re-register, so that the terminal device updates an MPS indicator in a re-registration process, where the MPS indicator indicates the MPS information of the terminal device.

In this embodiment, after determining, by using the user subscription information, that the MPS information of the terminal device changes, the network device may send the second configuration update command message to the terminal device. Because the terminal device may not support updating the MPS indicator by using the CUC message, the network device may indicate, in the second CUC message, the terminal device to reply to the second CUC message. In addition, the terminal device may indicate, by using a third indication item in a replied configuration update response message, whether the terminal device successfully decodes or updates the second CUC message. If the terminal device successfully decodes or updates the second CUC message, the terminal device may obtain the changed MPS information, and update the MPS indicator based on the changed MPS information. If the terminal device fails to decode or update the CUC message, the terminal device may not obtain, through decoding, a related item in the changed MPS information that is stored in the second CUC message, and the network device may infer that the terminal device does not support updating the MPS indicator by using the CUC message and indicate the terminal device to re-register, so that the terminal device updates the MPS indicator in the re-registration process.

With reference to the fifth aspect, in some implementations of the fifth aspect, the second message is a first CUC message or a deregistration message, where the first CUC message includes a registration request indicator bit, and the registration request indicator bit indicates the terminal device to re-register.

Because the terminal device is already in a connected state after the network device sends the second CUC message to the terminal device, the network device may send the first CUC message that includes the registration request indicator bit or the deregistration message to indicate the terminal device to re-register.

With reference to the fifth aspect, in some implementations of the fifth aspect, if the configuration update response message does not include the third indication item, the method further includes: receiving a second registration request message from the terminal device; and sending a second registration accept message to the terminal device, where the registration accept message includes the changed MPS information, so that the terminal device updates the MPS indicator based on the second accept information.

Optionally, if the terminal device fails to decode or update the second CUC message, the method further includes: receiving a second registration request message from the terminal device; and sending a second registration accept message to the terminal device, where the registration accept message includes the changed MPS information, so that the terminal device updates the MPS indicator based on the second accept information.

According to a sixth aspect, a communication method is provided, and is applied to a terminal device. The method includes: receiving a second configuration update command CUC message from a network device, where the second CUC message is sent based on multimedia priority service MPS information of the terminal device changing, the MPS information indicates an MPS access ID of the terminal device, and the second CUC message includes changed MPS information; and sending a configuration update response message to the network device, where the configuration update response message includes a third indication item, and the third indication item indicates that the terminal device successfully updates an MPS indicator.

In other words, in some embodiments, only the terminal device that successfully updates the MPS indicator (a terminal device that supports updating the MPS indicator by using the CUC message) includes the third indication item in the configuration update response message. In this way, signaling of a terminal device that supports an earlier protocol version does not need to be modified, and the network device may determine a capability of the terminal device based on whether the configuration update response message includes the third indication item, to facilitate implementation of the technical solution in this embodiment of this application.

Optionally, the method includes: receiving a second configuration update command CUC message from a network device, where the second CUC message is sent based on multimedia priority service MPS information of the terminal device changing, the MPS information indicates an MPS access ID of the terminal device, and the second CUC message includes changed MPS information; sending a configuration update response message to the network device, where the configuration update response message includes a third indication item, and the third indication item indicates that the terminal device fails to decode the second CUC message; receiving a second message from the network device, where the second message is for triggering the terminal device to re-register; and updating an MPS indicator in a re-registration process, where the MPS indicator indicates the MPS information of the terminal device.

Optionally, if the third indication item indicates that the terminal device successfully decodes the second CUC message, the network device may determine that the terminal device has updated the stored MPS indicator after the successful decoding, the terminal device supports updating the MPS indicator by using the CUC message, and an update procedure of the MPS indicator ends.

In other words, the terminal device may report, by including the third indication item in the configuration update response message, whether the received second CUC message is successfully decoded. A terminal device that fails to perform decoding is a terminal device that does not support updating the MPS indicator by using the CUC message. The network device may intuitively determine the capability of the terminal device by using the third indication item, and trigger the terminal device that does not support updating the MPS indicator by using the CUC message to re-register, to update the MPS indicator in the re-registration process. Decoding the second CUC message herein may be understood as whether to decode all content in the second CUC message (including a priority indicator IE item that stores the MPS information), or may be understood as whether the MPS information is parsed out.

With reference to the sixth aspect, in some implementations of the sixth aspect, the second message is a first CUC message or a deregistration message, where the first CUC message includes a registration request indicator bit, and the registration request indicator bit indicates the terminal device to re-register.

With reference to the sixth aspect, in some implementations of the sixth aspect, updating the MPS indicator in the re-registration process includes: sending a second registration request message to the network device; receiving a second registration accept message from the network device, where the second registration accept message includes the changed MPS information; and updating the MPS indicator based on the second registration accept message.

According to a seventh aspect, a communication apparatus is provided. The communication apparatus is a network device, the communication apparatus supports triggering, by using a CUC message, a terminal device to update a multimedia priority service MPS indicator, and the apparatus includes a transceiver unit, configured to obtain user subscription information, where the user subscription information indicates that MPS information of the terminal device changes, and the MPS information indicates an MPS access ID of the terminal device, where the transceiver unit is further configured to send a first message to the terminal device, where the first message is for triggering the terminal device to re-register, so that the terminal device updates the MPS indicator in a re-registration process, where the MPS indicator indicates the MPS information of the terminal device.

With reference to the seventh aspect, in some implementations of the seventh aspect, the apparatus further includes a processing unit, configured to obtain capability information indicating that the terminal device does not support updating the MPS indicator by using a configuration update command CUC message.

With reference to the seventh aspect, in some implementations of the seventh aspect, the processing unit is specifically configured to: send a second CUC message to the terminal device, where the second CUC message includes changed MPS information; receive a configuration update response message from the terminal device, where the configuration update response message does not include a third indication item, and the third indication item indicates that the terminal device successfully updates the MPS indicator; and determine, based on the configuration update response message not including the third indication item, that the terminal device does not support updating the MPS indicator by using the CUC message.

With reference to the seventh aspect, in some implementations of the seventh aspect, a second CUC message is sent to the terminal device, where the second CUC message includes changed MPS information; a configuration update response message is received from the terminal device, where the configuration update response message includes a third indication item, and the third indication item indicates that the terminal device fails to decode or update the second CUC message; and based on the third indication item indicating that the terminal device fails to decode the second CUC message, it is determined that the terminal device does not support updating the MPS indicator by using the CUC message.

With reference to the seventh aspect, in some implementations of the seventh aspect, the processing unit is specifically configured to: receive a first registration request message from the terminal device; and determine, based on the first registration request message, that the terminal device does not support updating the MPS indicator by using the CUC message.

With reference to the seventh aspect, in some implementations of the seventh aspect, the processing unit is specifically configured to determine, based on the first registration request message not including a first indication item, that the terminal device does not support updating the MPS indicator by using the CUC message, where the first indication item indicates that the terminal device supports updating the MPS indicator by using the CUC message.

With reference to the seventh aspect, in some implementations of the seventh aspect, the first registration request message includes a first indication item, where the first indication item indicates that the terminal device does not support updating the MPS indicator by using the CUC message.

With reference to the seventh aspect, in some implementations of the seventh aspect, the processing unit is specifically configured to determine, based on the first registration request message not including a second indication item, that the terminal device does not support updating the MPS indicator by using the CUC message, where the second indication item includes at least one of the following: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, a paging indication for voice services PIV, reject paging request RPR, paging restriction PR, a network slice simultaneous registration group NSSRG, minimization of service interruption MINT, event notification EventNotification, extended closed access group information list support Ex-CAG, and network slice access group NSAG.

With reference to the seventh aspect, in some implementations of the seventh aspect, the first message is any one of the following: a service reject message, a first CUC message, and a deregistration message, where the first CUC message includes a registration request indicator bit, and the registration request indicator bit indicates the terminal device to re-register.

With reference to the seventh aspect, in some implementations of the seventh aspect, the transceiver unit is further configured to: receive a second registration request message from the terminal device; and send a second registration accept message to the terminal device, where the second registration accept message includes the changed MPS information, so that the terminal device updates the MPS indicator based on the second registration accept message.

According to an eighth aspect, a communication apparatus is provided. The communication apparatus is a terminal device, and the apparatus includes: a transceiver unit, configured to receive a first message from a network device, where the first message is for triggering the terminal device to re-register, the first message is sent by the network device based on multimedia priority service MPS information of the terminal device changing, and the MPS information indicates an MPS access ID of the terminal device; and a processing unit, configured to update an MPS indicator in a re-registration process, where the MPS indicator indicates the MPS information of the terminal device.

With reference to the eighth aspect, in some implementations of the eighth aspect, the first information is sent by the network device based on the terminal device not supporting updating the MPS indicator by using a CUC message.

With reference to the eighth aspect, in some implementations of the eighth aspect, the transceiver unit is further configured to: receive a second configuration update command CUC message from the network device, where the second CUC message includes changed MPS information; and send a configuration update response message to the network device, where the configuration update response message does not include a third indication item, so that the network device determines, based on the configuration update response message not including the third indication item, that the terminal device does not support updating the MPS indicator by using the CUC message, where the third indication item indicates that the terminal device successfully updates the MPS indicator.

With reference to the eighth aspect, in some implementations of the eighth aspect, the transceiver unit is further configured to: receive a second configuration update command CUC message from the network device, where the second CUC message includes changed MPS information; and send a configuration update response message to the network device, where the configuration update response message includes a third indication item, and the third indication item indicates that the terminal device fails to decode the second CUC message, so that the network device determines, based on the configuration update response message, that the terminal device does not support updating the MPS indicator by using the CUC message.

With reference to the eighth aspect, in some implementations of the eighth aspect, the transceiver unit is further configured to send a first registration request message to the network device, so that the network device determines, based on the first registration request message, that the terminal device does not support updating the MPS indicator by using the CUC message.

With reference to the eighth aspect, in some implementations of the eighth aspect, the first registration request message does not include a first indication item, and that the terminal device does not support updating the MPS indicator by using the CUC message is determined by the network device based on the first registration request message not including the first indication item, where the first indication item indicates that the terminal device supports updating the MPS indicator by using the CUC message.

With reference to the eighth aspect, in some implementations of the eighth aspect, the first registration request message includes a first indication item, where the first indication item indicates that the terminal device does not support updating the MPS indicator by using the CUC message.

With reference to the eighth aspect, in some implementations of the eighth aspect, that the terminal device does not support updating the MPS indicator by using the CUC message is determined based on the first registration request message not including a second indication item: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, a paging indication for voice services PIV, a reject paging request RPR, paging restriction PR, network slice simultaneous registration group NSSRG, minimization of service interruption MINT, event notification EventNotification, extended closed access group information list support Ex-CAG, and network slice access group NSAG.

With reference to the eighth aspect, in some implementations of the eighth aspect, the first message is any one of the following: a service reject message, a first CUC message, and a deregistration message, where the first CUC message includes a registration request indicator bit, and the registration request indicator bit indicates the terminal device to re-register.

With reference to the eighth aspect, in some implementations of the eighth aspect, the processing unit is specifically configured to: send a second registration request message to the network device; receive a second registration accept message from the network device, where the second registration accept message includes the changed MPS information; and update the MPS indicator based on the second registration accept message.

According to a ninth aspect, a communication apparatus is provided. The communication apparatus is a network device, and the apparatus includes: a processing unit, configured to obtain capability information indicating whether a terminal device supports updating a multimedia priority service MPS indicator by using a configuration update command CUC message, where the MPS indicator indicates MPS information of the terminal device; and a transceiver unit, configured to: obtain user subscription information, where the user subscription information indicates that the MPS information of the terminal device changes, and the MPS information indicates an MPS access ID of the terminal device; and send a first message to the terminal device if the terminal device does not support updating the MPS indicator by using the CUC message, where the first message is for triggering the terminal device to re-register, so that the terminal device updates the MPS indicator in a re-registration process; or send a second CUC message to the terminal device if the terminal device supports updating the MPS indicator by using the CUC message, where the second CUC message includes changed MPS information.

With reference to the ninth aspect, in some implementations of the ninth aspect, the processing unit is specifically configured to: receive a first registration request message from the terminal device; and determine, based on the first registration request message, the capability information indicating whether the terminal device supports updating the MPS indicator by using the CUC message.

With reference to the ninth aspect, in some implementations of the ninth aspect, the processing unit is specifically configured to: if the first registration request message includes a first indication item, determine that the terminal device supports updating the MPS indicator by using the CUC message; or if the first registration request message does not include the first indication item, determine that the terminal device does not support updating the MPS indicator by using the CUC message, where the first indication item indicates that the terminal device supports updating the MPS indicator by using the CUC message.

With reference to the ninth aspect, in some implementations of the ninth aspect, the first registration request message includes a first indication item, where the first indication item indicates whether the terminal device supports updating the MPS indicator by using the CUC message.

With reference to the ninth aspect, in some implementations of the ninth aspect, the processing unit is specifically configured to: if a second indication item exists in the first registration request message, determine that the terminal device supports updating the MPS indicator by using the CUC message; or if the second indication item does not exist in the first registration request message, determine that the terminal device does not support updating the MPS indicator by using the CUC message, where the second indication item includes at least one of the following: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, paging indication for voice services PIV, reject paging request RPR, paging restriction PR, network slice simultaneous registration group NSSRG, minimization of service interruption MINT, event notification EventNotification, extended closed access group information list support Ex-CAG, and network slice access group NSAG.

With reference to the ninth aspect, in some implementations of the ninth aspect, the first message is any one of the following: a service reject message, a first CUC message, and a deregistration message, where the first CUC message includes a registration request indicator bit (REG bit), and the registration request indicator bit indicates the terminal device to re-register.

With reference to the ninth aspect, in some implementations of the ninth aspect, the transceiver unit is further configured to: receive a second registration request message from the terminal device; and send a second registration accept message to the terminal device, where the registration accept message includes the changed MPS information, so that the terminal device updates the MPS indicator based on the second registration accept message.

According to a tenth aspect, a communication apparatus is provided. The communication apparatus is a terminal device, and the apparatus includes: a transceiver unit, configured to: send a first registration request message to a network device, where the first registration request message includes a first indication item, the first indication item indicates whether the terminal device supports updating a multimedia priority service MPS indicator by using a configuration update command CUC message, and the MPS indicator indicates MPS information of the terminal device; and receive a first message from the network device if the terminal device does not support updating the MPS indicator by using the CUC message, where the first message is sent when the network device determines that the MPS information of the terminal device changes, the MPS information indicates an MPS access ID of the terminal device, and the first message is for triggering the terminal device to re-register; and a processing unit, configured to update the MPS indicator in a re-registration process.

Optionally, the first indication item may alternatively indicate that the terminal device supports updating the MPS indicator by using the CUC message. In this way, after the MPS information of the terminal device changes, the transceiver unit is further configured to receive a second CUC message, where the second CUC message includes changed MPS information of the terminal device, so that the processing unit of the terminal device may update the MPS indicator based on the second CUC message.

In the foregoing embodiment, the first indication item may be, for example, an indicator bit of one bit, and a capability of the terminal device (indicates whether the terminal device supports updating the MPS indicator by using the CUC message) is directly indicated by using "0" or "1". Alternatively, only a terminal device that supports updating the MPS indicator by using the CUC message may include the first indication item in the first registration request message, so that when discovering that the first registration request message does not include the first indication item, the network device triggers, by using the first message, the terminal device to perform the re-registration process. In this way, signaling of a terminal device that supports an earlier protocol version can be avoided from being modified, so that the technical solution in this embodiment of this application is more conveniently implemented.

With reference to the tenth aspect, in some implementations of the tenth aspect, the first message includes any one of the following: a service reject message, a first CUC message, and a deregistration message, where the first CUC message includes a registration request indicator bit, and the registration request indicator bit indicates the terminal device to re-register.

With reference to the tenth aspect, in some implementations of the tenth aspect, the processing unit is specifically configured to: send a second registration request message to the network device; receive a second registration accept message from the network device, where the second registration accept message includes the changed MPS information; and update the MPS indicator based on the second registration accept message.

According to an eleventh aspect, a communication apparatus is provided. The communication apparatus is a network device, and the apparatus includes: a processing unit, configured to: obtain user subscription information, where the user subscription information indicates that multimedia priority service MPS information of a terminal device changes, and the MPS information indicates an MPS access ID of the terminal device; and send a second configuration update command CUC message to the terminal device, where the second CUC message includes changed MPS information; and a transceiver unit, configured to receive a configuration update response message from the terminal device; and send a second message to the terminal device if the configuration update response message does not include a third indication item, where the second message is for triggering the terminal device to re-register, so that the terminal device updates the MPS indicator in a re-registration process, where the third indication item indicates that the terminal device successfully updates the MPS indicator.

Optionally, the apparatus includes a transceiver unit, configured to: obtain user subscription information, where the user subscription information indicates that multimedia priority service MPS information of a terminal device changes, and the MPS information indicates an MPS access ID of the terminal device; send a second configuration update command CUC message to the terminal device, where the second CUC message includes changed MPS information; receive a configuration update response message from the terminal device, where the configuration update response message includes a third indication item, and the third indication item indicates whether the terminal device successfully decodes the second CUC message; and send a second message to the terminal device if the terminal device fails to decode the second CUC message, where the second message is for triggering the terminal device to re-register, so that the terminal device updates an MPS indicator in a re-registration process, where the MPS indicator indicates the MPS information of the terminal device.

With reference to the eleventh aspect, in some implementations of the eleventh aspect, the second message is a first CUC message or a deregistration message, where the first CUC message includes a registration request indicator bit, and the registration request indicator bit indicates the terminal device to re-register.

With reference to the eleventh aspect, in some implementations of the eleventh aspect, if the configuration update response message does not include the third indication item, the transceiver unit is further configured to: receive a second registration request message from the terminal device; and send a second registration accept message to the terminal device, where the registration accept message includes the changed MPS information, so that the terminal device updates the MPS indicator based on the second accept information.

Optionally, if the terminal device fails to decode the second CUC message, the transceiver unit is further configured to: receive a second registration request message from the terminal device; and send a second registration accept message to the terminal device, where the registration accept message includes the changed MPS information, so that the terminal device updates the MPS indicator based on the second accept information.

According to a twelfth aspect, a communication apparatus is provided. The communication apparatus is a terminal device, and the apparatus includes a transceiver unit, configured to: receive a second configuration update command CUC message from a network device, where the second CUC message is sent based on multimedia priority service MPS information of the terminal device changing, the MPS information indicates an MPS access ID of the terminal device, and the second CUC message includes changed MPS information; and send a configuration update response message to the network device, where the configuration update response message includes a third indication item, and the third indication item indicates that the terminal device successfully updates an MPS indicator.

Optionally, the apparatus includes: a transceiver unit, configured to: receive a second configuration update command CUC message from a network device, where the second CUC message is sent based on multimedia priority service MPS information of the terminal device changing, the MPS information indicates an MPS access ID of the terminal device, and the second CUC message includes changed MPS information; send a configuration update response message to the network device, where the configuration update response message includes a third indication item, and the third indication item indicates that the terminal device fails to decode the second CUC message; and receive a second message from the network device, where the second message is for triggering the terminal device to re-register; and a processing unit, configured to update an MPS indicator in a re-registration process, where the MPS indicator indicates the MPS information of the terminal device.

Optionally, if the third indication item indicates that the terminal device successfully decodes the second CUC message, the network device may determine that the terminal device has updated the stored MPS indicator after the successful decoding, the terminal device supports updating the MPS indicator by using the CUC message, and an update procedure of the MPS indicator ends.

With reference to the twelfth aspect, in some implementations of the twelfth aspect, the second message is a first CUC message or a deregistration message, where the first CUC message includes a registration request indicator bit, and the registration request indicator bit indicates the terminal device to re-register.

With reference to the twelfth aspect, in some implementations of the twelfth aspect, the processing unit is specifically configured to: send a second registration request message to the network device; receive a second registration accept message from the network device, where the second registration accept message includes the changed MPS information; and update the MPS indicator based on the second registration accept message.

According to a thirteenth aspect, a communication apparatus is provided, and includes a module or a unit configured to perform the method in the first aspect, the third aspect, or the fifth aspect and any one of the possible implementations of the first aspect, the third aspect, or the fifth aspect. The module or the unit may be a hardware circuit, may be software, or may be implemented by a hardware circuit in combination with software.

According to a fourteenth aspect, a communication apparatus is provided, and includes a module or a unit configured to perform the method in the second aspect, the fourth aspect, or the sixth aspect and any one of the possible implementations of the second aspect, the fourth aspect, or the sixth aspect. The module or the unit may be a hardware circuit, may be software, or may be implemented by a hardware circuit in combination with software.

According to a fifteenth aspect, a communication apparatus is provided, and includes at least one processor, where the processor is coupled to a memory, and the memory is configured to store instructions, to implement the method in the first aspect, the second aspect, the third aspect, the fourth aspect, the fifth aspect, or the sixth aspect and the first aspect, the second aspect, the third aspect, the fourth aspect, the fifth aspect, or the sixth aspect.

Optionally, the apparatus further includes the memory. The memory and the processor may be separately deployed, or may be centrally deployed. Optionally, the apparatus further includes a communication interface, and the processor is coupled to the communication interface.

According to a sixteenth aspect, a communication apparatus is provided. The communication apparatus includes at least one logic circuit and an input/output interface, and the logic circuit is configured to be coupled to the input/output interface and perform transmission of data through the input/output interface, to perform the method in the first aspect, the second aspect, the third aspect, the fourth aspect, the fifth aspect, or the sixth aspect and the first aspect, the second aspect, the third aspect, the fourth aspect, the fifth aspect, or the sixth aspect.

According to a seventeenth aspect, a computer-readable storage medium is provided, and stores computer-executable instructions. When the computer-executable instructions are run on a computer, the computer is enabled to perform the method in the first aspect, the second aspect, the third aspect, the fourth aspect, the fifth aspect, or the sixth aspect and any one of the possible implementations of the first aspect, the second aspect, the third aspect, the fourth aspect, the fifth aspect, or the sixth aspect.

According to an eighteenth aspect, a computer program product is provided, and includes computer program code. When the computer program code is run, a computer is enabled to perform the method in the first aspect, the second aspect, the third aspect, the fourth aspect, the fifth aspect, or the sixth aspect and the first aspect, the second aspect, the third aspect, the fourth aspect, the fifth aspect, or the sixth aspect.

According to a nineteenth aspect, a chip is provided. The chip includes a processor and a communication interface, and the processor reads, through the communication interface, instructions stored in a memory, to perform the method in the first aspect, the second aspect, the third aspect, the fourth aspect, the fifth aspect, or the sixth aspect and any one of the possible implementations of the first aspect, the second aspect, the third aspect, the fourth aspect, the fifth aspect, or the sixth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method in the first aspect, the second aspect, the third aspect, the fourth aspect, the fifth aspect, or the sixth aspect and any one of the possible implementations of the first aspect, the second aspect, the third aspect, the fourth aspect, the fifth aspect, or the sixth aspect.

According to a twentieth aspect, a communication system is provided, and includes the communication apparatus according to the thirteenth aspect and/or the communication apparatus according to the fourteenth aspect.

### BRIEF DESCRIPTION OF DRAWINGS

FIG. 1 is a diagram of a network architecture to which an embodiment of this application is applicable;
FIG. 2 is a schematic flowchart of an update process of an MPS indicator;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a block diagram of a communication apparatus according to an embodiment of this application;
FIG. 7 is a block diagram of a communication apparatus according to an embodiment of this application; and
FIG. 8 is a block diagram of a communication apparatus according to an embodiment of this application.

### DESCRIPTION OF EMBODIMENTS

The following describes technical solutions in embodiments of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The technical solutions provided in this application may be further applied to a future communication system, for example, a 6th generation mobile communication system. This is not limited in this application.

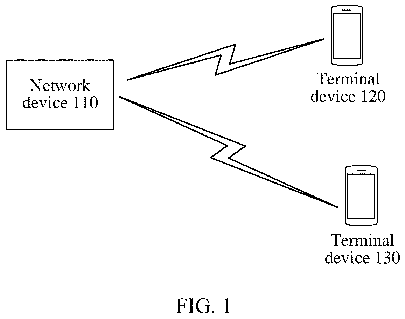

FIG. 1 is a diagram of a network architecture to which an embodiment of this application is applicable. As shown in FIG. 1, a communication system in this embodiment of this application may include a network device 110 and a terminal device (FIG. 1 shows two terminal devices: a terminal device 120 and a terminal device 130).

The terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

The network device may be a device configured to communicate with the terminal device, and the network device may be an AMF (access and mobility management function, access and mobility management function). This is not limited in embodiments of this application.

The following describes the technical solutions provided in embodiments of this application with reference to the accompanying drawings.

For ease of understanding of embodiments of this application, the following descriptions are provided.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. "At least one item (piece) of the following" or a similar expression thereof means any combination of these items, including a singular item (piece) or any combination of a plurality of items (pieces). For example, at least one item (piece) of a, b, or c may indicate a, b, c, a and b, a and c, b and c, or a, b, and c, where a, b, and c may be singular or plural.

In embodiments of this application, "first", "second", and various numbers are merely used for differentiation for ease of description, but are not used for limiting the scope of embodiments of this application. For example, the numbers are used for distinguishing between different indication information.

In embodiments of this application, protocol definition may be implemented by prestoring corresponding code, a table, or another manner that can indicate related information in devices (for example, a terminal device and a network device). A specific implementation of the protocol definition is not limited in this application. The "protocol" in embodiments of this application may be a standard protocol in the communication field, and may include, for example, an LTE protocol, an NR protocol, and a protocol applied to a future communication system. This is not limited in this application. A "related protocol" mentioned in this application is a protocol in which updating an MPS indicator by using a CUC message is provided.

In embodiments of this application, descriptions such as "when...", "in a case that...", and "if..." all mean that a device (for example, a terminal device or a network device) performs corresponding processing in a specific objective case, but are not intended to limit time, do not require that the device (for example, the terminal device or the network device) have a determining action during implementation, and do not mean that there is another limitation.

A multimedia priority service enables a user who has subscribed to the service to obtain a session service with a priority via a public network. The session service with the priority can implement normal communication in a case of network congestion.

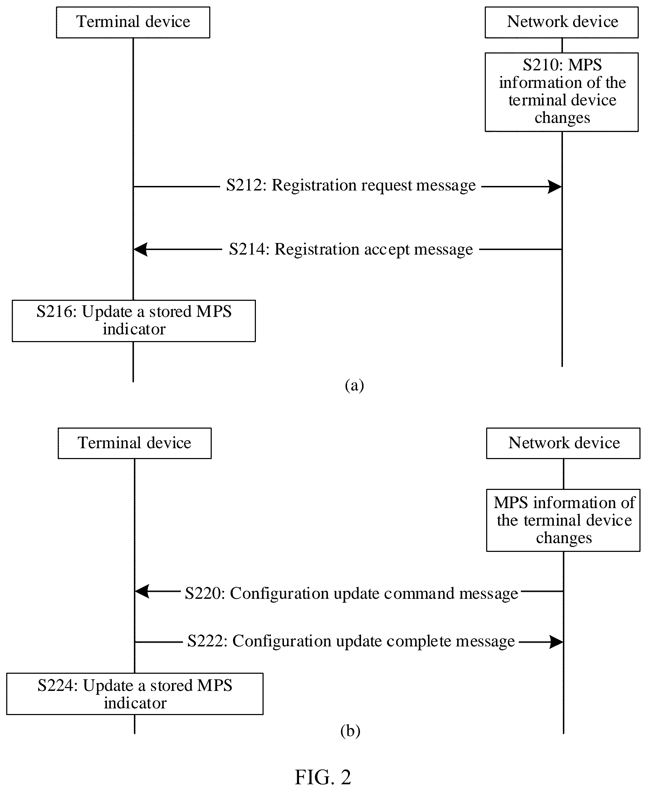

For a terminal device and a network device that do not support updating an MPS indicator by using a CUC message, the network device can update MPS information to the terminal device only in a registration procedure initiated by the terminal device, so that the MPS indicator stored in the terminal device is consistent with changed MPS information. As shown in (a) in FIG. 2, an update process of the MPS indicator may include the following steps.

S210: The network device learns that MPS information of a terminal device of a user changes.

S212: The terminal device sends a registration request (registration request) message to the network device.

S214: The network device sends a registration accept message to the terminal device.

In S214, the registration accept message includes an MPS indicator bit, and the MPS indicator bit indicates an MPS access ID (access identity) after change of the terminal device.

S216: The terminal device updates the MPS indicator.

In S216, the terminal device may update the MPS indicator (MPS indicator) stored in the terminal device, and may map a link establishment cause based on a value of the MPS indicator when there is a service requirement subsequently.

For a terminal device and a network device that support a related protocol, that the network device indicates, by using a configuration update command message, the terminal to update an MPS indicator is newly added. As shown in (b) in FIG. 2, an update process of the MPS indicator may include the following steps.

S220: The network device sends the configuration update command message to the terminal device.

In S220, the configuration update command message includes an MPS indicator bit corresponding to changed MPS information.

S222: The terminal device sends configuration update complete information to the network device (this step is optional).

The configuration update complete information indicates that the terminal device successfully receives the configuration update command message.

S224: The terminal device updates the MPS indicator.

If the network device supports the related protocol (supports updating the MPS indicator by using the CUC message or supports triggering, by using the CUC message, the terminal device to update the MPS indicator), when MPS information of the terminal device changes, the network device directly sends, to the terminal device, a CUC message that carries the MPS indicator bit, where the MPS indicator bit indicates an MPS access identity after the change of the terminal device. If the terminal device does not support the related protocol (not support updating the MPS indicator by using the CUC message), the MPS indicator bit in the CUC message cannot be decoded. However, the network device may consider that the terminal device has updated the MPS indicator based on the received configuration update complete message, causing an access attempt problem to occur when the terminal subsequently requests to initiate the service.

An embodiment of this application provides a communication method, so that in a case that a network device supports triggering, by using a CUC message, a terminal device to update an MPS indicator, the terminal device can be triggered in different manners to update an MPS indicator, to reduce a possibility that a problem occurs in a connection of the terminal device because the terminal device does not support updating the MPS indicator by using the CUC message, enhancing user experience.

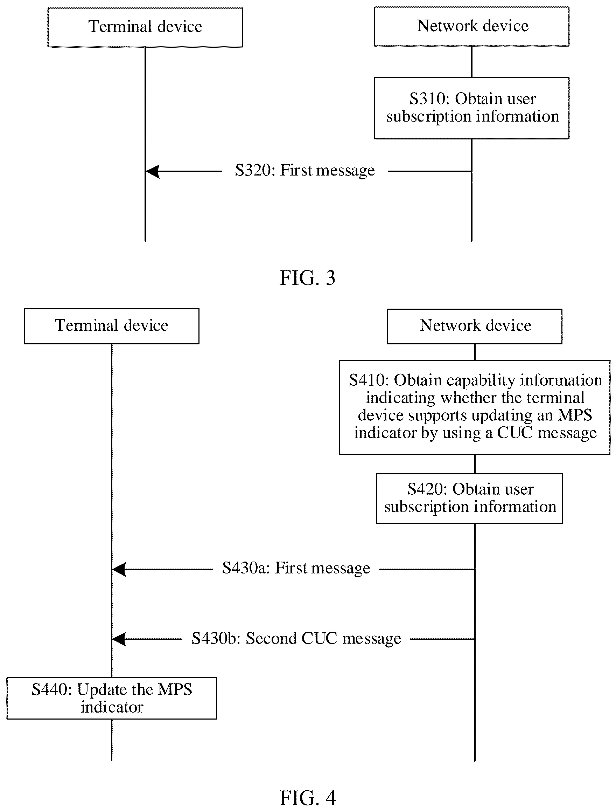

As shown in FIG. 3, the network device supports triggering, by using the CUC message, the terminal device to update the MPS indicator. The communication method includes the following steps.

S310: The network device obtains user subscription information, where the user subscription information indicates that MPS information of the terminal device changes.

In S310, that the MPS information changes may be that the terminal device changes from originally subscribing to an MPS service to not subscribing to the MPS service, or the terminal device changes from originally not subscribing to an MPS service to subscribing to the MPS service. The MPS information indicates an MPS access ID (access identity) of the terminal device. The network device in the method 300 may be an access and mobility management function (access and mobility management function, AMF) network element. The AMF network element may obtain the MPS information of the terminal device from user subscription information that is received from a unified data management (unified data management, UDM) function network element, and determine that the MPS information of the terminal device changes. The MPS information may also be referred to as MPS subscription information, and indicates an MPS access identity of the terminal device.

S320: The network device sends a first message to the terminal device, where the first message is for triggering the terminal device to re-register, so that the terminal device updates the MPS indicator in a re-registration process.

Correspondingly, the terminal device receives the first message from the network device.

In S320, the MPS indicator may be stored in a USIM card or a non-volatile memory of the terminal device, and indicates MPS information that is of the terminal device and that is currently stored in the terminal device. The stored MPS information may be different from the MPS information that is of the terminal device and that corresponds to the user subscription information, for example, in a period of time after the MPS information of the terminal device changes and before the terminal device updates the stored MPS indicator.

According to the technical solution provided in this embodiment of this application, although the network device supports triggering, by using the CUC message, the terminal device to update the MPS indicator (that is, supports sending, to the terminal device, the CUC message that carries the MPS information of the terminal, which may also be referred to as that the network device supports updating the MPS indicator by using the CUC message), because the network device does not know whether the terminal device supports updating the MPS indicator by using the CUC message (whether the terminal device can decode an item that indicates the MPS information and that is in the CUC message), after the MPS information of the terminal device changes, the network device directly indicates the terminal device to re-register, so that the terminal device updates the MPS indicator in the re-registration process.

In this way, the network device does not need to determine capability information of the terminal device (whether the MPS indicator can be updated by using the CUC message) by using a complex procedure, and the terminal device can update the MPS indicator in time for subsequent service use, to reduce a possibility that a due service cannot be enjoyed or access is rejected during the subsequent service use because the network device directly sends, to the terminal device, the CUC message that carries the MPS information of the terminal, but the terminal device cannot perform decoding.

Specifically, during re-registration, the terminal device may send registration request (registration request) information to the network device. Correspondingly, the network device receives the registration request message from the terminal device.

After receiving the registration request message, the network device may send a registration accept (registration accept) message to the terminal device. Correspondingly, the terminal device receives the registration accept message.

In this embodiment of this application, the registration accept message may include changed MPS information of the terminal device, and the changed MPS information of the terminal device includes being capable of being carried by using an MPS indicator bit (MPS indicator bit) in a 5G system feature support information element (5G system feature support information element, 5GS feature support IE) item. For example, when the MPS indicator bit is 1, it indicates that the access identity of the terminal device is 1, and the terminal device is an MPS access type user; or when the MPS indicator bit is 0, it indicates that the access identity of the terminal device is 0, and the terminal device is not an MPS access type user. In this way, the terminal device may update the MPS indicator by using the registration accept message.

If the terminal device is an MPS access type user, an RRC establishment cause (RRC establishment cause) may be mapped to MPS priority access (mps-PriorityAccess) during subsequent access.

In this embodiment of this application, before sending the first message to trigger the terminal device to re-register, the network device may obtain capability information indicating that the terminal device does not support updating the MPS indicator by using the CUC message. In other words, the network device sends the first message to the terminal device to trigger the terminal device to update the MPS indicator in the re-registration process, only after determining that the terminal device does not support updating the MPS indicator by using the CUC message.

The capability information indicating whether the terminal device supports updating the MPS indicator by using the CUC message may be related to a protocol version supported by the terminal device. After receiving a CUC message that is sent by the network device and that carries updated MPS information (the MPS indicator bit), the terminal device may decode a related item in the CUC message, and update the stored MPS indicator. In this way, the link establishment cause may be mapped based on an updated MPS indicator when the service is subsequently requested to be initiated. The MPS information is stored in a priority indicator information element (priority indicator IE) item in the CUC message. If the terminal device does not support updating the MPS indicator by using the CUC message, even if the network device sends, to the terminal device, the CUC message that carries the updated MPS information, the terminal device cannot decode the priority indicator information element item.

In some embodiments, the network device may determine, by using a first registration request message that is sent by the terminal device during registration with the network device, that the terminal device does not support updating the MPS indicator by using the CUC message.

During the registration with the network device, the terminal device sends a registration request message to the network device. The registration request message may include a 5G mobility management capability information element (5G mobility management capability information element, 5GMM capability IE) item, and include some information that is about the terminal device and that is needed during the registration. After receiving the registration request message, the network device sends a registration accept message to the terminal device, to complete a registration process of the terminal device.

For example, the network device may determine, based on the first registration request message of the terminal device not including a first indication item, that the terminal device does not support updating the MPS indicator by using the CUC message, where the first indication item may indicate that the terminal device supports updating the MPS indicator by using the CUC message. In other words, the network device may determine, based on whether the first registration request message includes the first indication item, whether the terminal device supports updating the MPS indicator by using the CUC message, and then trigger the terminal device that does not support updating the MPS indicator by using the CUC message to re-register, so that the terminal device updates the MPS indicator in the re-registration process.

In this way, only a first registration request message of a terminal device that supports a related protocol (the terminal device that supports updating the MPS indicator by using the CUC message) needs to be modified, while signaling of a terminal device that does not support the foregoing protocol (not support updating the MPS indicator by using the CUC message) does not need to be modified, so that the technical solution in this embodiment of this application is more easily implemented. Optionally, an indication item (the first indication item) in the first registration request message of the terminal device may indicate that the terminal device does not support updating the MPS indicator by using the CUC message. In this way, the network device may determine, in the registration process of the terminal device, that the terminal device does not support updating the MPS indicator by using the CUC message, so that the network device may directly send, if the MPS information of the terminal device subsequently changes, the first message to the terminal device to indicate the terminal device to re-register, to update the MPS indicator in the re-registration process.

It should be understood that, the indication item may be an indication item that already exists in the registration request message, and a capability of the terminal device is indicated by using an indicator bit in the indication item. For example, when the indicator bit is 0, it indicates that the terminal device does not support updating the MPS indicator by using the CUC message; or when the indicator bit is 1, it indicates that the terminal device supports updating the MPS indicator by using the CUC message. Alternatively, the indication item may be an indication item newly added to the registration request message. A value of the indicator bit (or the indication item) indicating whether the terminal device supports updating the MPS indicator by using the CUC message may be set by the terminal device based on whether the terminal device has a corresponding capability. The first indication item may explicitly indicate a corresponding capability of the terminal device.

For another example, because content of the 5GMM capability IE item that is included in the registration request message is related to the protocol version supported by the terminal device, when receiving the registration request message, the network device may infer, based on the content of the 5GMM capability IE item, a protocol version used or supported by the terminal device, to infer whether the terminal device supports updating the MPS indicator by using the CUC message. Specifically, if the registration request message sent by the terminal device does not include a second indication item, the network device may infer that the terminal device does not support updating the MPS indicator by using the CUC message, where the second indication item includes at least one of the following: extended rejected network slice selection assistance information (Extended rejected network slice selection assistance information, ER-NSSAI), 5G proximity service direct discovery (5G proximity service direct discovery, 5G ProSe-dd), 5G proximity service direct communication (5G ProSe direct communication, 5G ProSe-dc), 5G proximity service layer 2 user equipment network relay (5G ProSe layer-2 UE-to-network-relay, 5G ProSe-l2relay), 5G proximity service layer 3 user equipment network relay (5G ProSe layer-3 UE-to-network-relay, 5G ProSe-l3relay), 5G proximity service layer 2 user equipment network remote user equipment (5G ProSe layer-2 UE-to-network-remote, 5G ProSe-l2rmt), 5G proximity service layer 3 user equipment network remote user equipment (5G ProSe layer-3 UE-to-network-remote, 5G ProSe-l3rmt), new radio paging subgroup support indication (new radio paging subgroup support indication, NR-PSSI), N1 non-access stratum signaling connection release (N1 non-access stratum signaling connection release, NCR), paging indication for voice services (Paging indication for voice services, PIV), reject paging request (Reject paging request, RPR), paging restriction (Paging restriction, PR), network slice simultaneous registration group (network slice simultaneous registration group, NSSRG), minimization of service interruption (Minimization of service interruption, MINT), event notification (Event notification), extended closed access group information list support (Extended closed access group information list support, Ex-CAG), and network slice access group (network slice AS group, NSAG).

It should be understood that, the second indication item may not be limited to corresponding items listed above. Any feature information included in the protocol that supports updating the MPS indicator by using the CUC message may be used as the second indication item (an indication item or information that is different from the protocol that does not support updating the MPS indicator by using the CUC message).

Optionally, if the network device determines, based on the registration request message of the terminal device, that the terminal device supports updating the MPS indicator by using the CUC message. For example, the first indication item directly indicates that the terminal device supports updating the MPS indicator by using the CUC message. Alternatively, if the registration request message sent by the terminal device includes the second indication item, the network device may infer that, when the terminal device supports updating the MPS indicator by using the CUC message, the network device may send a second CUC message to the terminal device, and include the changed MPS information in the second CUC message. Correspondingly, the terminal device receives the second CUC message, and updates the MPS indicator based on the first CUC message. The changed MPS information may be stored in an MPS indicator bit (MPS indicator bit) of a priority indicator information element (priority indicator information element) item in the second CUC message. For example, when the terminal device subscribes to an MPS, the indicator bit may be 1; or when the terminal device does not subscribe to an MPS, the indicator bit may be 0.

In this way, for terminal devices having different capabilities, the network device supports triggering, in different manners, the terminal devices to update the MPS indicator. For the terminal device that does not support updating the MPS by using the CUC message, the terminal device updates the MPS in a re-registration manner, to avoid an access problem caused by inconsistency between MPS information of a network and the MPS information of the terminal device because the CUC message is directly sent, but the terminal device cannot perform decoding. For the terminal device that supports updating the MPS indicator by using the CUC message, the CUC message that carries the updated MPS information is directly sent, so that the terminal device can update the MPS indicator based on the CUC message. In this way, signaling exchange between the terminal device and the network device can be reduced, and impact on the service of the terminal device can be reduced as much as possible, that is, the update of the MPS indicator is completed.

In an embodiment in which the network device directly sends, based on the MPS information of the terminal device changing, the first message to the terminal device to indicate the terminal device to re-register, or the network device determines, by using the first registration request message, that the terminal device does not support updating the MPS indicator by using the CUC message, and then sends the first message to the terminal device to indicate the terminal device to re-register. The first message may be any one of a service reject (service reject) message, a first CUC message, or a deregistration (deregistration) message, where the first CUC message includes a registration request indicator bit (REG bit), and the registration request indicator bit indicates the terminal device to re-register.

When the network device determines that the MPS information of the terminal device changes, the terminal device may be in an idle (idle) state. The network device may initiate paging (paging) to the terminal device, so that the terminal device sends a service request (service request) message to the network device, and then the network device sends a service reject (service reject) message to the terminal device. The terminal device performs the re-registration process based on the service reject message.

Alternatively, when receiving the service request message, the network device sends a service accept (service accept) message to the terminal device, and then sends a deregistration message or a first CUC message that includes the registration request indicator bit to the terminal device. After receiving the deregistration message or the first CUC message, the terminal device may re-register. The re-registration process has been described above. Details are not described herein again.

In some other embodiments, the network device may send the CUC message to the terminal device, include the changed MPS information in the CUC message, and receive a configuration update response message replied by the terminal device. If the terminal device has successfully updated the MPS indicator based on the CUC message, a third indication item may be carried in the configuration update response message. In this way, the network device may determine a capability of the terminal device based on whether the configuration update response message includes the third indication item, and then trigger a terminal device that does not include the third indication item to re-register, so that the terminal device can update the MPS indicator in the re-registration process.

In this way, without modifying signaling of the terminal device that does not support updating the MPS indicator by using the CUC message, the network device can determine the capability of the terminal device, and then determine, based on the capability, whether to trigger the re-registration process, so that the technical solution in this embodiment of this application can be more conveniently implemented.

Alternatively, the network device may send the CUC message to the terminal device, include the changed MPS information in the CUC message, and receive a configuration update response message replied by the terminal device. The terminal device includes a third indication item in the configuration update response message, to indicate whether the terminal device successfully decodes the CUC message.

For example, when an indicator bit of the third indication item is 0, it indicates that the terminal device fails to decode the CUC message. Because the priority indicator IE item storing the MPS information is newly added in a protocol that supports updating the MPS indicator by using the CUC message, if the terminal device does not support the foregoing protocol, the terminal device cannot decode the item, and then the network device may infer that the terminal device does not support updating the MPS indicator by using the CUC message. When the indicator bit of the third indication item is 1, it indicates that the terminal device has successfully decoded the CUC message. In this case, the terminal device updates the MPS indicator based on the CUC message, the network device can also infer that the terminal device has updated the MPS indicator, and an update process of the MPS indicator ends.

When the third indication item indicates that the terminal device fails to decode the CUC message, the network device determines that the terminal device does not support updating the MPS by using the CUC message. In other words, the terminal device may be triggered, by using the first message, to re-register, and the terminal device may update the MPS indicator in the re-registration process.

For example, the configuration update response message may be configuration update complete (configuration update complete) information.

Based on the terminal device indicating, by using the third indication item in the message replied to CUC message, whether the terminal device successfully decodes the CUC message, the network device may infer whether the terminal device supports updating the MPS indicator by using the CUC message, and send, to the network device when the terminal device does not support updating the MPS indicator by using the CUC message, the first message to indicate the terminal device to re-register, so that the terminal device updates the MPS indicator in the re-registration process. According to the technical solution provided in this embodiment of this application, the network device can conveniently determine the capability of the terminal device, and trigger, in a case that learning that the capability of the terminal device is insufficient, the terminal device to re-register in time, to reduce a signaling exchange procedure between the terminal device and the network device.

When the network device learns, by using the configuration response information, that the terminal device does not support updating the MPS indicator by using the CUC message, and triggers, by using the first message, the terminal device to re-register, the terminal device has been paged by the network device when the terminal device receives the CUC message that carries the changed MPS information, and is in a connected state. The first message may be a CUC message or a deregistration message that carries the registration request indicator bit.

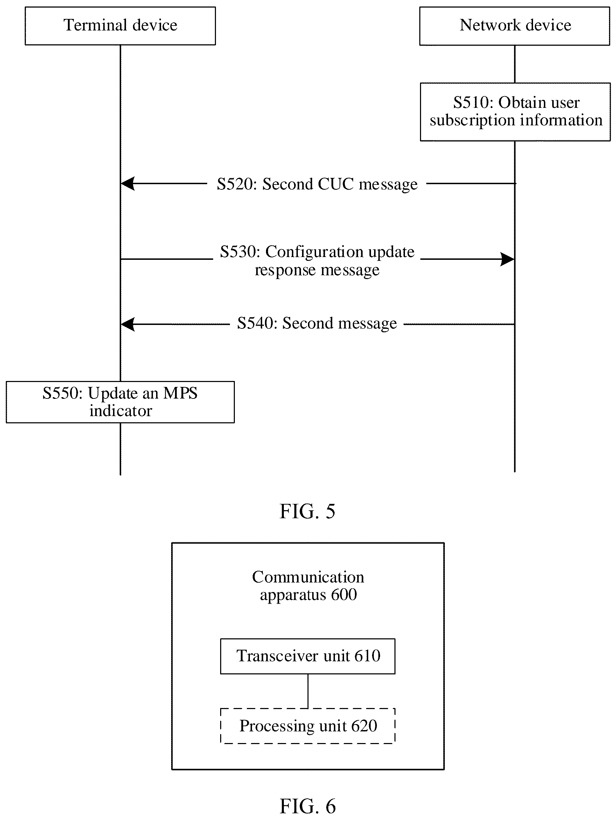

By using FIG. 4 and FIG. 5, the following describes in detail the communication method shown in FIG. 3. As shown in FIG. 4, the communication method includes the following steps.

S410: A network device obtains capability information indicating whether a terminal device supports updating an MPS indicator by using a CUC message, where the MPS indicator indicates an access type (MPS information) subscribed to by the terminal device. Correspondingly, the terminal device sends a first registration request message to the network device.

S420: The network device obtains user subscription information, where the user subscription information indicates that MPS information of the terminal device changes.

S430a: Send a first message to the terminal device if the terminal device does not support updating the MPS indicator by using the CUC message, where the first message is for triggering the terminal device to re-register. Correspondingly, the terminal device receives the first message from the network device.

S430b: Send a second CUC message to the terminal device if the terminal device supports updating the MPS indicator by using the CUC message, where the second CUC message includes changed MPS information. Correspondingly, the terminal device receives the second CUC message from the network device.

S440: The terminal device updates the MPS indicator.

In S410, the network device may obtain, based on the registration request message, the capability information indicating whether the terminal device supports updating the MPS indicator by using the CUC message. In some embodiments, the first registration request message may include a first indication item, where the first indication item directly indicates whether the terminal device supports updating the MPS indicator by using the CUC message. Alternatively, whether the terminal device supports updating the MPS indicator by using the CUC message is indicated based on whether the first indication item is carried. In some other embodiments, the network device may determine, based on whether a second indication item exists in the first registration request message, whether the terminal device supports updating the MPS indicator by using the CUC message. When the first registration request message includes the second indication item, the network device may infer that the terminal device supports updating the MPS indicator by using the CUC message; or when the first registration request message does not include the second indication item, the network device may infer that the terminal device does not support updating the MPS indicator by using the CUC message. The second indication item may include at least one of the following: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, paging indication for voice services PIV, reject paging request RPR, paging restriction PR, network slice simultaneous registration group NSSRG, minimization of service interruption MINT, event notification EventNotification, extended closed access group information list support Ex-CAG, and network slice access group NSAG.

The network device may be an AMF network element. In S420, the AMF network element may obtain the user subscription information (also referred to as user subscription context information) from a UDM network element, and determine, based on the user subscription information, that the MPS information of the terminal device changes.

In S430a and S430b, in a case that the terminal device does not support updating the MPS indicator by using the CUC message, the network device may trigger, by using the first message, the terminal device to re-register, so that the terminal device updates the MPS indicator in a re-registration process. In a case that the terminal device supports updating the MPS indicator by using the CUC message, the second CUC message that carries the changed MPS information is sent to the terminal device, so that the terminal device may update the MPS indicator based on the second CUC message.

The first message may include any one of a deregistration message, registration reject information, and a CUC message that carries a registration request indicator bit.

In S440, the terminal device updates the MPS indicator.

For specific details, refer to descriptions of the method 300. Details are not described herein again.

FIG. 5 shows another communication method according to an embodiment of this application. The communication method includes the following steps.

S510: A network device obtains user subscription information, where the user subscription information indicates that MPS information of a terminal device changes.

S520: The network device sends a second CUC message to the terminal device, where the second CUC message includes changed MPS information.

Correspondingly, the terminal device receives the second CUC message from the network device.

S530: The terminal device sends a configuration update response message to the network device, where the configuration update response message includes a third indication item, and the third indication item indicates whether the terminal device successfully decodes the second CUC message. Alternatively, whether the terminal device successfully updates an MPS indicator (that is, successfully decodes the CUC message) is indicated based on whether the third indication item is carried.

S540: In a case that the terminal device fails to decode the second CUC message (or in a case that the terminal device fails to update the MPS indicator), the network device sends a second message to the terminal device, where the second message is for triggering the terminal device to re-register.

S550: The terminal device updates the MPS indicator in a subsequent registration procedure initiated by the terminal device.

In S530, after receiving the second CUC message that carries the changed MPS information, the terminal device may indicate, in replied configuration response information, whether to decode the second CUC message. Alternatively, whether the terminal device successfully updates the MPS (that is, successfully decodes the CUC message) is indicated based on whether the third indication item is carried. If the terminal device successfully decodes the information or successfully updates the MPS indicator (successfully decodes the CUC message), the network device may infer that the terminal device supports updating the MPS indicator by using the CUC message, and the terminal device has updated the MPS indicator based on the second CUC message. If the terminal device fails to decode the information, the network device may infer that the terminal device does not support updating the MPS indicator by using the CUC message. In this case, the network device may trigger, by sending the second message to the terminal device, the terminal device to re-register, so that the terminal device updates the MPS indicator in a re-registration process.

The second message may be a deregistration message or a CUC message that carries a registration request indicator bit.

For specific details, refer to descriptions of the method 300. Details are not described herein again.

FIG. 6 shows a communication apparatus 600 according to an embodiment of this application. The communication apparatus 600 is equivalent to a network device. The communication apparatus 600 includes a transceiver unit 610. Optionally, the communication apparatus 600 further includes a processing unit 620. The communication apparatus 600 may be configured to perform steps performed by the network device in communication methods in FIG. 3 to FIG. 5.

Specifically, as shown in FIG. 6, the communication apparatus 600 supports triggering, by using a CUC message, a terminal device to update a multimedia priority service MPS indicator. The apparatus includes the transceiver unit 610, configured to obtain user subscription information, where the user subscription information indicates that MPS information of the terminal device changes, and the MPS information indicates an MPS access ID of the terminal device, where the transceiver unit 610 is further configured to send a first message to the terminal device, where the first message is for triggering the terminal device to re-register, so that the terminal device updates the MPS indicator in a re-registration process, where the MPS indicator indicates the MPS information of the terminal device.

In this embodiment of this application, the apparatus further includes the processing unit 620, configured to obtain capability information indicating that the terminal device does not support updating the MPS indicator by using a configuration update command CUC message.

In this embodiment of this application, the processing unit 620 is specifically configured to: send a second CUC message to the terminal device, where the second CUC message includes changed MPS information; receive a configuration update response message from the terminal device, where the configuration update response message does not include a third indication item, and the third indication item indicates that the terminal device successfully updates the MPS indicator; and determine, based on the configuration update response message not including the third indication item, that the terminal device does not support updating the MPS indicator by using the CUC message.

In this embodiment of this application, a second CUC message is sent to the terminal device, where the second CUC message includes changed MPS information; a configuration update response message is received from the terminal device, where the configuration update response message includes a third indication item, and the third indication item indicates that the terminal device fails to decode the second CUC message; and based on the third indication item indicating that the terminal device fails to decode the second CUC message, it is determined that the terminal device does not support updating the MPS indicator by using the CUC message.

In this embodiment of this application, the processing unit 620 is specifically configured to: receive a first registration request message from the terminal device; and determine, based on the first registration request message, that the terminal device does not support updating the MPS indicator by using the CUC message.

In this embodiment of this application, the processing unit 620 is specifically configured to: determine, based on the first registration request message not including a first indication item, that the terminal device does not support updating the MPS indicator by using the CUC message, where the first indication item indicates that the terminal device supports updating the MPS indicator by using the CUC message.

In this embodiment of this application, the first registration request message includes a first indication item, where the first indication item indicates that the terminal device does not support updating the MPS indicator by using the CUC message.

In this embodiment of this application, the processing unit 620 is specifically configured to determine, based on the first registration request message not including a second indication item, that the terminal device does not support updating the MPS indicator by using the CUC message, where the second indication item includes at least one of the following: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1non-access stratum signaling connection release NCR, paging indication for voice services PIV, reject paging request RPR, paging restriction PR, network slice simultaneous registration group NSSRG, minimization of service interruption MINT, event notification EventNotification, extended closed access group information list support Ex-CAG, and network slice access group NSAG.

In this embodiment of this application, the first message is any one of the following: a service reject message, a first CUC message, and a deregistration message, where the first CUC message includes a registration request indicator bit, and the registration request indicator bit indicates the terminal device to re-register.

In this embodiment of this application, the transceiver unit 610 is further configured to: receive a second registration request message from the terminal device; and send a second registration accept message to the terminal device, where the second registration accept message includes the changed MPS information, so that the terminal device updates the MPS indicator based on the second registration accept message.

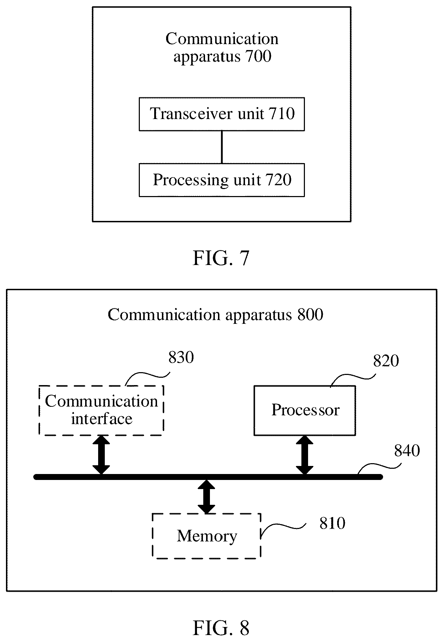

FIG. 7 shows another communication apparatus 700 according to an embodiment of this application. The communication apparatus 700 is a terminal device. The communication apparatus 700 includes a transceiver unit 710 and a processing unit 720. The communication apparatus 700 may be configured to perform steps performed by a terminal device in the method embodiments in FIG. 3 and FIG. 5.

Specifically, the communication apparatus 700 includes: the transceiver unit 710, configured to receive a first message from a network device, where the first message is for triggering the terminal device to re-register, the first message is sent by the network device based on multimedia priority service MPS information of the terminal device changing, and the MPS information indicates an MPS access ID of the terminal device; and the processing unit 720, configured to update an MPS indicator in a re-registration process, where the MPS indicator indicates the MPS information of the terminal device.

In this embodiment of this application, the first information is sent by the network device based on the terminal device not supporting updating the MPS indicator by using a CUC message.

In this embodiment of this application, the transceiver unit 710 is further configured to: receive a second configuration update command CUC message from the network device, where the second CUC message includes changed MPS information; and send a configuration update response message to the network device, where the configuration update response message does not include a third indication item, so that the network device determines, based on the configuration update response message not including the third indication item, that the terminal device does not support updating the MPS indicator by using the CUC message, where the third indication item indicates that the terminal device successfully updates the MPS indicator.

In this embodiment of this application, the transceiver unit 710 is further configured to: receive a second configuration update command CUC message from the network device, where the second CUC message includes changed MPS information; and send a configuration update response message to the network device, where the configuration update response message includes a third indication item, and the third indication item indicates that the terminal device fails to decode the second CUC message, so that the network device determines, based on the configuration update response message, that the terminal device does not support updating the MPS indicator by using the CUC message.

In this embodiment of this application, the transceiver unit 710 is further configured to send a first registration request message to the network device, so that the network device determines, based on the first registration request message, that the terminal device does not support updating the MPS indicator by using the CUC message.

In this embodiment of this application, the first registration request message does not include a first indication item, and that the terminal device does not support updating the MPS indicator by using the CUC message is determined by the network device based on the first registration request message not including the first indication item, where the first indication item indicates that the terminal device supports updating the MPS indicator by using the CUC message.

In this embodiment of this application, the first registration request message includes a first indication item, where the first indication item indicates that the terminal device does not support updating the MPS indicator by using the CUC message.

In this embodiment of this application, that the terminal device does not support updating the MPS indicator by using the CUC message is determined based on the first registration request message not including a second indication item: extended rejected network slice selection assistance information ER-NSSAI, 5G proximity service direct discovery 5G ProSe-dd, 5G proximity service direct communication 5G ProSe-dc, 5G proximity service layer 2 user equipment network relay 5G ProSe-12relay, 5G proximity service layer 3 user equipment network relay 5G ProSe-l3relay, 5G proximity service layer 2 user equipment network remote user equipment 5G ProSe-l2rmt, 5G proximity service layer 3 user equipment network remote user equipment 5G ProSe-l3rmt, new radio paging subgroup support indication NR-PSSI, N1 non-access stratum signaling connection release NCR, paging indication for voice services PIV, reject paging request RPR, paging restriction PR, network slice simultaneous registration group NSSRG, minimization of service interruption MINT, event notification EventNotification, extended closed access group information list support Ex-CAG, and network slice access group NSAG.

In this embodiment of this application, the first message is any one of the following: a service reject message, a first CUC message, and a deregistration message, where the first CUC message includes a registration request indicator bit, and the registration request indicator bit indicates the terminal device to re-register.

In this embodiment of this application, the processing unit 720 is specifically configured to: send a second registration request message to the network device; receive a second registration accept message from the network device, where the second registration accept message includes the changed MPS information; and update the MPS indicator based on the second registration accept message.

FIG. 8 shows another communication apparatus 800 according to an embodiment of this application. The communication apparatus 800 shown in FIG. 8 may correspond to the communication apparatus described above. The communication apparatus 800 includes a processor 820. In this embodiment of this application, the processor 820 is configured to implement a corresponding control and management operation. For example, the processor 820 is configured to support the communication apparatus 800 in performing the method, operation, or function in the foregoing embodiments. Optionally, the communication apparatus 800 may further include a memory 810 and a communication interface 830. The processor 820, the communication interface 830, and the memory 810 may be connected to each other, or may be connected to each other through a bus 840. The communication interface 830 is configured to support the communication apparatus in communicating with another device and the like. The memory 810 is configured to store program code and data of the communication apparatus. The processor 820 invokes the code or the data stored in the memory 810 to implement a corresponding operation. The memory 810 may or may not be coupled to the processor. The coupling in this embodiment of this application is an indirect coupling or a communication connection between communication apparatuses, units, or modules, and the indirect coupling or the communication connection may be implemented in electric, mechanical, or other forms, and is for information exchange between the communication apparatuses, the units, or the modules.

The processor 820 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The communication interface 830 may be a transceiver, a circuit, a bus, a module, or another type of communication interface. The bus 840 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depend on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In several embodiments provided in this application, it should be understood that, the disclosed system, apparatuses, and methods may be implemented in other manners. For example, the apparatus embodiments described above are merely an example. For example, division of the units is merely logical function division. During actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or the units may be implemented in electronic, mechanical, or other forms.

Units described as separate components may or may not be physically separate, and components displayed as units may or may not be physical units, to be specific, may be located in one place, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a network device, wherein the network device supports triggering, by using a configuration update command CUC message, a terminal device to update a multimedia priority service MPS indicator, and the method comprises:
obtaining user subscription information, wherein the user subscription information indicates that MPS information of the terminal device changes, and the MPS information indicates an MPS access ID of the terminal device; and
sending a first message to the terminal device, wherein the first message is for triggering the terminal device to re-register, so that the terminal device updates the MPS indicator in a re-registration process, wherein the MPS indicator indicates the MPS information of the terminal device.

2. The method according to claim 1, wherein before sending the first message to the terminal device, the method further comprises:
obtaining capability information indicating that the terminal device does not support updating the MPS indicator by using the CUC message.

3. The method according to claim 2, wherein obtaining the capability information indicating that the terminal device does not support updating the MPS indicator by using the CUC message comprises:
sending a second CUC message to the terminal device, wherein the second CUC message comprises changed MPS information;
receiving a configuration update response message from the terminal device, wherein the configuration update response message does not comprise a third indication item, and the third indication item indicates that the terminal device successfully updates the MPS indicator; and
determining, based on the configuration update response message not comprising the third indication item, that the terminal device does not support updating the MPS indicator by using the CUC message.

4. The method according to claim 2, wherein obtaining the capability information indicating that the terminal device does not support updating the MPS indicator by using the CUC message comprises:
receiving a first registration request message from the terminal device; and
determining, based on the first registration request message, that the terminal device does not support updating the MPS indicator by using the CUC message.

5. The method according to claim 4, wherein determining, based on the first registration request message, that the terminal device does not support updating the MPS indicator by using the CUC message comprises:
determining, based on the first registration request message not comprising a first indication item, that the terminal device does not support updating the MPS indicator by using the CUC message, wherein the first indication item indicates that the terminal device supports updating the MPS indicator by using the CUC message.

6. The method according to claim 4, wherein determining, based on the first registration request message, that the terminal device does not support updating the MPS indicator by using the CUC message comprises:
determining, based on the first registration request message not comprising a second indication item, that the terminal device does not support updating the MPS indicator by using the CUC message, wherein the second indication item comprises at least one of the following:
extended rejected network slice selection assistance information, 5G proximity service direct discovery, 5G proximity service direct communication, 5G proximity service layer 2 user equipment network relay, 5G proximity service layer 3 user equipment network relay, 5G proximity service layer 2 user equipment network remote user equipment, 5G proximity service layer 3 user equipment network remote user equipment, new radio paging subgroup support indication, N1 non-access stratum signaling connection release, a paging indication for voice services, reject paging request, paging restriction, network slice simultaneous registration group, minimization of service interruption, event notification, extended closed access group information list support, and network slice access group.

7. The method according to any one of claims 1 to 6, wherein the first message is any one of the following:
a service reject message, a first CUC message, and a deregistration message, wherein the first CUC message comprises a registration request indicator bit, and the registration request indicator bit indicates the terminal device to re-register.

8. The method according to any one of claims 1 to 7, wherein the method further comprises:
receiving a second registration request message from the terminal device; and
sending a second registration accept message to the terminal device, wherein the second registration accept message comprises the changed MPS information, so that the terminal device updates the MPS indicator based on the second registration accept message.

9. A communication method, applied to a network device, wherein the method comprises:
obtaining capability information indicating whether a terminal device supports updating a multimedia priority service MPS indicator by using a configuration update command CUC message, wherein the MPS indicator indicates MPS information of the terminal device;
obtaining user subscription information, wherein the user subscription information indicates that the MPS information of the terminal device changes, and the MPS information indicates an MPS access ID of the terminal device; and
sending a first message to the terminal device if the terminal device does not support updating the MPS indicator by using the CUC message, wherein the first message is for triggering the terminal device to re-register, so that the terminal device updates the MPS indicator in a re-registration process; or
sending a second CUC message to the terminal device if the terminal device supports updating the MPS indicator by using the CUC message, wherein the second CUC message comprises changed MPS information.

10. The method according to claim 9, wherein obtaining the capability information indicating whether the terminal device supports updating the MPS indicator by using the CUC message comprises:
receiving a first registration request message from the terminal device; and
determining, based on the first registration request message, the capability information indicating whether the terminal device supports updating the MPS indicator by using the CUC message.

11. The method according to claim 10, wherein determining the capability information indicating whether the terminal device supports updating the MPS indicator by using the CUC message comprises:
if the first registration request message comprises a first indication item, determining that the terminal device supports updating the MPS indicator by using the CUC message; or
if the first registration request message does not comprise the first indication item, determining that the terminal device does not support updating the MPS indicator by using the CUC message, wherein
the first indication item indicates that the terminal device supports updating the MPS indicator by using the CUC message.

12. The method according to claim 10, wherein determining the capability information indicating whether the terminal device supports updating the MPS indicator by using the CUC message comprises:
if the first registration request message comprises a second indication item, determining that the terminal device supports updating the MPS indicator by using the CUC message; or
if the first registration request message does not comprise the second indication item, determining that the terminal device does not support updating the MPS indicator by using the CUC message, wherein the second indication item comprises at least one of the following:
extended rejected network slice selection assistance information, 5G proximity service direct discovery, 5G proximity service direct communication, 5G proximity service layer 2 user equipment network relay, 5G proximity service layer 3 user equipment network relay, 5G proximity service layer 2 user equipment network remote user equipment, 5G proximity service layer 3 user equipment network remote user equipment 5G ProSe-l3rmt, new radio paging subgroup support indication, N1 non-access stratum signaling connection release, paging indication for voice services, reject paging request, paging restriction, a network slice simultaneous registration group, minimization of service interruption, event notification, extended closed access group information list support, and network slice access group.

13. The method according to any one of claims 9 to 12, wherein the first message is any one of the following: a service reject message, a first CUC message, and a deregistration message, wherein the first CUC message comprises a registration request indicator bit (REG bit), and the registration request indicator bit indicates the terminal device to re-register.

14. The method according to any one of claims 9 to 13, wherein if the terminal device does not support updating the MPS indicator by using the CUC message, the method further comprises:
receiving a second registration request message from the terminal device; and
sending a second registration accept message to the terminal device, wherein the registration accept message comprises the changed MPS information, so that the terminal device updates the MPS indicator based on the second registration accept message.

15. A communication method, applied to a network device, wherein the method comprises:
obtaining user subscription information, wherein the user subscription information indicates that multimedia priority service MPS information of a terminal device changes, and the MPS information indicates an MPS access ID of the terminal device;
sending a second configuration update command CUC message to the terminal device, wherein the second CUC message comprises changed MPS information;
receiving a configuration update response message from the terminal device; and
sending a second message to the terminal device if the configuration update response message does not comprise a third indication item, wherein the second message is for triggering the terminal device to re-register, so that the terminal device updates the MPS indicator in a re-registration process, wherein the third indication item indicates that the terminal device successfully updates the MPS indicator.

16. The method according to claim 15, wherein
the second message is a first CUC message or a deregistration message, wherein the first CUC message comprises a registration request indicator bit, and the registration request indicator bit indicates the terminal device to re-register.

17. The method according to claim 15 or 16, wherein if the configuration update response message does not comprise the third indication item, the method further comprises:
receiving a second registration request message from the terminal device; and
sending a second registration accept message to the terminal device, wherein the registration accept message comprises the changed MPS information, so that the terminal device updates the MPS indicator based on the second accept information.

18. A communication apparatus, wherein the communication apparatus is a network device, the communication apparatus supports triggering, by using a CUC message, a terminal device to update a multimedia priority service MPS indicator, and the communication apparatus comprises:
a transceiver unit, configured to obtain user subscription information, wherein the user subscription information indicates that MPS information of the terminal device changes, and the MPS information indicates an MPS access ID of the terminal device, wherein
the transceiver unit is further configured to send a first message to the terminal device, wherein the first message is for triggering the terminal device to re-register, so that the terminal device updates the MPS indicator in a re-registration process, wherein the MPS indicator indicates the MPS information of the terminal device.

19. The apparatus according to claim 18, wherein the apparatus further comprises:
a processing unit, configured to obtain capability information indicating that the terminal device does not support updating the MPS indicator by using a configuration update command CUC message.

20. The apparatus according to claim 19, wherein the processing unit is specifically configured to:
send a second CUC message to the terminal device, wherein the second CUC message comprises changed MPS information;
receive a configuration update response message from the terminal device, wherein the configuration update response message does not comprise a third indication item, and the third indication item indicates that the terminal device successfully updates the MPS indicator; and
determine, based on the configuration update response message not comprising the third indication item, that the terminal device does not support updating the MPS indicator by using the CUC message.

21. The apparatus according to claim 19, wherein the processing unit is specifically configured to:
receive a first registration request message from the terminal device; and
determine, based on the first registration request message, that the terminal device does not support updating the MPS indicator by using the CUC message.

22. The apparatus according to claim 21, wherein the processing unit is specifically configured to:
determine, based on the first registration request message not comprising a first indication item, that the terminal device does not support updating the MPS indicator by using the CUC message, wherein the first indication item indicates that the terminal device supports updating the MPS indicator by using the CUC message.

23. The apparatus according to claim 21, wherein the processing unit is specifically configured to:
determine, based on the first registration request message not comprising a second indication item, that the terminal device does not support updating the MPS indicator by using the CUC message, wherein the second indication item comprises at least one of the following:
extended rejected network slice selection assistance information, 5G proximity service direct discovery, 5G proximity service direct communication, 5G proximity service layer 2 user equipment network relay, 5G proximity service layer 3 user equipment network relay, 5G proximity service layer 2 user equipment network remote user equipment, 5G proximity service layer 3 user equipment network remote user equipment, new radio paging subgroup support indication, N1 non-access stratum signaling connection release, paging indication for voice services, reject paging request, paging restriction, network slice simultaneous registration group, minimization of service interruption, event notification, extended closed access group information list support, and network slice access group.

24. The apparatus according to any one of claims 18 to 23, wherein the first message is any one of the following:
a service reject message, a first CUC message, and a deregistration message, wherein the first CUC message comprises a registration request indicator bit, and the registration request indicator bit indicates the terminal device to re-register.

25. The apparatus according to any one of claims 18 to 24, wherein the transceiver unit is further configured to:
receive a second registration request message from the terminal device; and
send a second registration accept message to the terminal device, wherein the second registration accept message comprises the changed MPS information, so that the terminal device updates the MPS indicator based on the second registration accept message.

26. A communication apparatus, comprising at least one processor, wherein the processor is coupled to a memory, and the memory is configured to store instructions; and when the instructions are run by the processor,
the processor is enabled to perform the method according to any one of claims 1 to 8,
the processor is enabled to perform the method according to any one of claims 9 to 14, or
the processor is enabled to perform the method according to any one of claims 15 to 17.

27. A computer-readable storage medium, storing computer-executable instructions, wherein when the computer-executable instructions are run on a computer, the computer is enabled to perform the method according to any one of claims 1 to 8, the computer is enabled to perform the method according to any one of claims 9 to 14, or the computer is enabled to perform the method according to any one of claims 15 to 17.

28. A computer program product, wherein the computer program product comprises computer program code; and when the computer program code is run, the method according to any one of claims 1 to 8 is implemented, the method according to any one of claims 9 to 14 is implemented, or the method according to any one of claims 15 to 17 is implemented.
